Europäisches Patentamt

European Patent Office

Office européen des brevets

(11) Numéro de publication: **0 399 124**
A1

## (12) DEMANDE DE BREVET EUROPEEN

(21) Numéro de dépôt: 89401992.6

(22) Date de dépôt: **10.07.89**

(51) Int. Cl.5: **B60P 3/14, B60P 1/64**

(30) Priorité: **26.05.89 FR 8907413**

(43) Date de publication de la demande:
**28.11.90 Bulletin 90/48**

(84) Etats contractants désignés:
**AT BE CH DE ES GB GR IT LI LU NL SE**

(71) Demandeur: **ETABLISSEMENTS DELAHAY
Société Anonyme dite
21, rue Pierre Curie
F-62217 Beaurains(FR)**

(72) Inventeur: **Delahay, Jacques
Rue du 19 Mars 1962
Achicourt F-62217 Beaurains(FR)**

(74) Mandataire: **Lepage, Jean-Pierre
Cabinet Lemoine & Associés 12, Boulevard
de la Liberté
F-59800 Lille(FR)**

(54) **Conteneur aménagé pour le contrôle technique des véhicules.**

(57) L'invention est relative à un conteneur aménagé pour le contrôle technique des véhicules.

Selon l'invention, le conteneur (1) peut être transporté par camion sur les lieux d'examen. Il présente des moyens de mise à niveau qui lui permettent de se poser au sol depuis le camion et réciproquement. Ces moyens se présentent sous la forme de vérins télescopiques qui forment des béquilles (3) pour le conteneur (1).

L'invention concerne la sécurité routière et le contrôle technique des véhicules préventif ou obligatoire.

EP 0 399 124 A1

MISE EN EXPLOITATION

FIG.2

ACCÈS

Xerox Copy Centre

L'invention est relative à un conteneur aménagé pour le contrôle technique des véhicules. Elle trouvera tout particulièrement son application chez les organismes d'assurance et prévention, dans les administrations désireuses d'améliorer la sécurité routière. Elle est favorable et économique pour réaliser le contrôle technique dans les départements de faible densité de population.

Le contrôle technique des véhicules va être obligatoire en 1990 pour tous les véhicules de plus de cinq ans en ce qui concerne les 52 points de la Norme AFNOR. La périodicité des contrôles et le nombre de points contrôlés devant être remis en état étant augmentés progressivement pour arriver en 1993 1995 un contrôle de 52 points sur les véhicules de plus de trois ans et tous les deux ans. Le contrôle technique n'est pas imposé à une date fixe mais peut être organisé et étalé sur quelques semaines.

Actuellement, une réglementation est en train de se mettre en place pour définir avec précision les caractéristiques techniques du véhicule qui doivent être contrôlées. Dans un premier temps, le futur contrôle technique impose la mise en oeuvre d'un matériel technique de test conséquent.

En effet, il est nécessaire tout d'abord de vérifier l'éclairage et la signalisation du véhicule. Ceci nécessite un petit appareillage mobile. Par contre, pour l'inspection visuelle de l'état mécanique du véhicule, il est nécessaire d'avoir accès au dessous de la voiture et pour cela un pont élévateur hydraulique est impératif. Ce matériel lourd se rencontre chez les garagistes professionnels.

Un banc d'essais de freinage est également nécessaire pour contrôler l'efficacité du freinage du véhicule et un banc d'essais de suspensions non obligatoire actuellement mais fortement conseillé doit également permettre de vérifier le bon fonctionnement des amortisseurs et autres éléments de suspension.

Une plaque de ripage permet de contrôler la géométrie d'essieu et un analyseur de gaz est utilisé pour mesurer et optimiser la combustion.

Enfin, un dispositif de gonflage à double sortie permet d'équilibrer la pression des pneus à la valeur préconisée par le constructeur. D'autres équipements spécialisés peuvent être également employés pour parfaire l'inspection. A titre d'exemple, un analyseur de fumées pour véhicules diesel, un contrôleur d'usure de pneus ou un nettoyeur haute pression peuvent également être adjoints à l'ensemble des appareillages précédents pour assurer le contrôle technique des véhicules.

Tous ces équipements sont traditionnellement indépendants et réclament donc pour leur mise en oeuvre un local de grandes dimensions où ils sont réunis. Ce besoin de place et d'énergie fait que les centres de contrôle technique des véhicules sont actuellement fixes et intégrés dans les locaux, le fait de devoir se déplacer parfois relativement loin constitue un obstacle au développement du contrôle technique et de la prévention dans les zones de faible densité de population où la rentabilité d'un centre fixe est aléatoire.

Ceci a été perçu par l'administration qui a mis en place un service gratuit de contrôle technique limité des véhicules. Pour cela, les responsables disposent d'une station mobile qui se présente généralement sous la forme d'une tente ou d'un abri léger et ils peuvent organiser une campagne d'examen de véhicules présentés par des automobilistes bénévoles. Ce type d'action remporte généralement un vif succès étant donné que la démarche est facile. L'automobiliste ne doit pas se déplacer très loin, la vérification est rapide, il s'agit d'un service rendu gratuitement.

Malheureusement, l'examen du véhicule est très limité étant donné le manque de moyens matériels susceptibles d'être employés. Par exemple, il n'est pas envisageable actuellement d'employer un pont élévateur permettant une visite sous caisse et le contrôle technique porte essentiellement sur le réglage des phares et l'usure des pneus et l'angle de braquage.

Dans ces conditions, le contrôle technique mobile tel qu'il est pratiqué actuellement n'est que d'un intérêt limité et ne peut en aucun cas se substituer au contrôle technique réglementé tel qu'il est en train de s'instaurer.

Le but principal de la présente invention est de présenter un conteneur aménagé pour le contrôle technique des véhicules, qui présente l'avantage de pouvoir être embarqué facilement sur un châssis de camion pour bénéficier d'une mobilité totale et qui comporte un équipement technique complet susceptible de permettre un examen des véhicules conforme à la réglementation en vigueur Norme AFNOR 50201X. Dans ce contexte, le contrôle technique mobile organisé par permanence sur des lieux publics, tel qu'on le connaît, prend toute sa signification avec le conteneur de la présente invention puisqu'il permet dorénavant un examen approfondi des caractéristiques du véhicule en rapport avec la sécurité et la norme AFNOR. Les renseignements obtenus sont du plus grand intérêt puisqu'ils sont complets et permettent à l'usager d'effectuer les réparations qui s'imposent.

Un autre but de la présente invention est de présenter un conteneur aménagé qui, quoique complet sur le plan technique, est très commode de mise en oeuvre. En effet, des études particulières ont été menées pour réduire le personnel nécessaire à tel point que selon le mode préférentiel de réalisation de l'invention, un seul opérateur peut installer le conteneur de façon opérationnelle en moins de quinze minutes. Ceci est très important car le conteneur peut par conséquent être déplacé très fréquemment tout en conservant un rendement de travail élevé.

Bien que de dimensions modestes, le conteneur aménagé est complet sur le plan technique, en particulier il comprend un pont élévateur indispensable pour l'inspection du dessous du véhicule.

D'autres buts et avantages de la présente invention apparaîtront au cours de la description qui va suivre qui n'est cependant donnée qu'à titre indicatif et qui n'a pas pour but de la limiter.

Le conteneur aménagé pour le contrôle technique des véhicules, destiné dans le cadre de la sécurité routière à être transporté par camion sur les lieux d'examen où les véhicules sont expertisés à l'aide de son équipement embarqué, est caractérisé par le fait qu'il présente des moyens autonomes de mise à niveau qui lui permettent de se poser au sol depuis le châssis du camion et réciproquement.

L'invention sera mieux comprise à la lecture de la description suivante accompagnée de dessins en annexe, parmi lesquels :

- la figure 1 schématise le conteneur en position embarqué sur un camion,
- la figure 2 représente le conteneur désolidarisé du camion,
- la figure 3 représente le conteneur en position d'exploitation.

La présente invention vise un conteneur aménagé pour le contrôle technique des véhicules. Elle trouvera son application en particulier chez les professionnels ou dans l'administration chargée de la sécurité routière, les organismes de prévention des assurances ou chaîne de contrôle homologuée dans les zones de faible densité de population.

Actuellement, on connaît deux types de contrôle technique, celui rigoureux effectué dans les centres agréés et celui plus léger effectué par des centres mobiles qui ne concerne qu'un nombre limité de caractéristiques techniques.

Devant l'accent mis par les pouvoirs publics pour l'expertise systématique des véhicules anciens notamment au moment de leur revente, l'usager se voit incité à entretenir régulièrement sa voiture.

Le contrôle porte principalement sur les organes liés à la sécurité et à la pollution. Pour pouvoir être complètement réalisé, il nécessite un appareillage lourd et complexe. C'est pourquoi le contrôle technique est effectué dans des centres fixes où les locaux sont suffisamment grands pour installer l'ensemble du matériel nécessaire. La norme AFNOR définit avec précision le type d'examen à faire, ce qui garantit le sérieux des résultats.

En dehors de ces bilans complets, il existe des installations légères menées de place en place et qui permettent aux automobilistes de faire effectuer quelques contrôles limités. Le principal handicap de ces stations mobiles est précisément l'absence de matériels lourds tels qu'un pont de levage pour effectuer un contrôle au dessous de la voiture. Bien souvent, l'examen porte sur le réglage des phares, éventuellement un contrôle de la combustion et des émanations toxiques mais ne va guère au-delà.

L'avantage de ces stations mobiles, c'est précisément de se rapprocher des conducteurs pour leur offrir un service facile et couvrir une région importante.

Précisément, l'invention se donne pour objet d'offrir une facilité d'accès aux automobilistes en couvrant une région importante tout en apportant les avantages du centre fixe de contrôle technique quant à l'étendue des caractéristiques vérifiées et le sérieux des mesures.

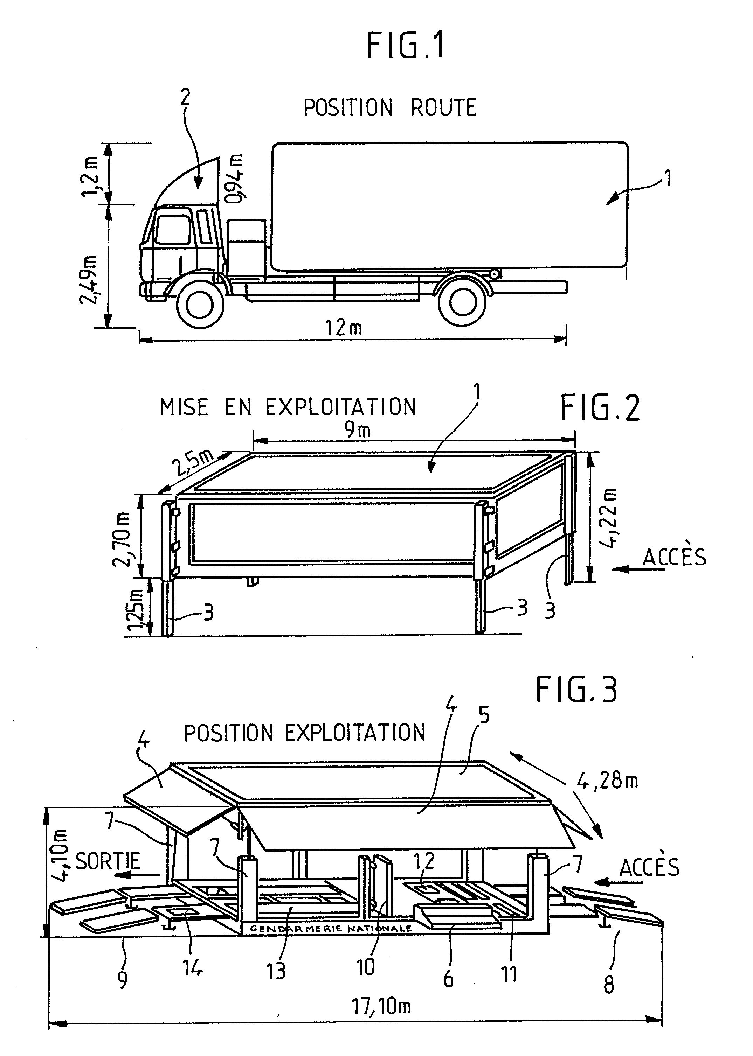

La figure 1 représente le conteneur (1) de l'invention en position route. Dans ce cas, il est chargé sur le châssis d'un camion (2) tel un conteneur standard. A titre d'exemple, le camion (2) porteur est de type 19 tonnes dont le châssis est équipé de moyens conformes aux normes pour arrimer le conteneur (1), par exemple il s'agit d'un verrouillage twist lock. Ce mécanisme de verrouillage est normalisé sur tous les camions porte-conteneurs.

Les dimensions du conteneur, quoique modifiables selon la configuration désirée, représentent dans le cas choisi une longueur de 9 mètres sur une largeur de 2,5 mètres pour une hauteur de 2,70 mètres. Le camion (2) pourra en outre servir à tracter une remorque bureau pour accompagner le conteneur et permettre d'assumer dans de bonnes conditions les tâches administratives en relation avec le service. Cette remorque bureau peut également servir à contenir un groupe électrogène incorporé par exemple dans un compartiment insonorisé pour rendre la station complètement autonome.

Le conteneur (1) pouvant très facilement être déplacé à l'aide du camion (2), il s'agit d'autoriser son déchargement. Traditionnellement, les conteneurs sont manutentionnés à l'aide d'engins de levage lourds et encombrants dont l'utilisation ne peut être envisagée dans la présente application.

Selon l'invention, le conteneur (1) présente des moyens de mise à niveau qui lui permettent de se poser au sol depuis le châssis du camion (2) et réciproquement. Ces moyens, tels que représentés à la figure 2, se présentent sous la forme de vérins télescopiques (3) qui forment des béquilles pour le conteneur (1). Dans la pratique, il s'avère que quatre vérins télescopiques (3) placés dans chaque coin du conteneur sont suffisants pour assurer son soutien. De préférence, le conteneur dispose de ranchers latéraux dont l'ouverture permet le pivotement et l'écartement des vérins (3) de levée. Eventuellement, des plaques complémentaires peuvent être fixées en bout de vérin pour réduire la pression d'appui sur certains sols meubles. Une fois les vérins (3) descendus, le dispositif de verrouillage du conteneur (1) sur le camion (2) est ôté, ce qui permet au camion (2) de s'extraire du conteneur pour venir se ragner par exemple à proximité ou servir à une autre tâche. Ensuite, la descente du conteneur (1) est opérée par une action simultanée sur l'ensemble des vérins (3) de soutien du conteneur (1). Les vérins sont synchronisés par un mécanisme d'autorégulation afin qu'ils conservent une assiette stable. Il faut toutefois noter qu'une action individuelle sur l'un quelconque des vérins (3) peut être réalisée afin de tenir compte d'une déclivité ou d'inégalités de terrain.

Une fois le conteneur (1) posé sur le sol, il est souhaitable de replier les vérins (3) et de fermer les ranchers afin de soigner l'esthétique en position de travail.

Les panneaux latéraux (4) du conteneur (1) sont articulés sur le toit (5) du conteneur (1) tels qu'illustrés à la figure 3. De préférence, l'ouverture des panneaux latéraux (4) est facilitée par des compas à gaz non illustrés. En outre, des sécurités assurent le verrouillage des panneaux latéraux en cas de tempête. Le dégagement qui résulte de l'ouverture des panneaux latéraux permet de déployer le pupitre de commande (6) qui vient se positionner par basculement sur le côté du conteneur (1).

Selon l'invention, le toit (5) du conteneur présente des moyens de surélévation. Cette caractéristique a deux avantages, d'une part elle permet de réduire la hauteur du conteneur chargé sur le camion, d'où moins de prise au vent, passage dans des accès difficiles tels que sous des tunnels, et ensuite elle est indispensable pour l'utilisation d'un pont élévateur situé à l'intérieur du conteneur (1). Les moyens de surélévation de la toiture (5) se présentent sous la forme de vérins (7) tels qu'illustrés à la figure 3. Ces vérins sont de préférence hydrauliques et placés à chaque coin du conteneur.

Les rampes d'accès (8) et de sortie (9) seront avantageusement assistées par un mécanisme hydraulique. Ceci permet à un seul opérateur de mettre en service le conteneur sans difficulté.

Ensuite, l'opérateur positionne la console (10) de réglage des projecteurs et l'ensemble est opérationnel.

La suite de la description porte sur l'équipement du conteneur tel que réalisé pour correspondre aux différents examens techniques requis, néanmoins d'autres aménagements pourraient parfaitement être réalisés selon les besoins et les circonstances.

Une borne de gonflage électronique dispose de branchements électriques et d'air comprimé sur le conteneur (1) qui comprend un compresseur d'air incorporé. Cet appareil permet de gonfler et d'équilibrer deux pneus d'un même essieu en une seule opération.

Après les pneumatiques, la vérification du freinage de l'essieu avant est réalisée. Pour cela, le conteneur (1) dispose d'un banc de freinage (11) entièrement automatisé avec transmission centralisée des données. Les informations indiquent la puissance de freinage de chacune des roues avec une indication d'écart. Si le déséquilibre dépasse un certain seuil, la valeur du déséquilibre se met à clignoter.

Puis, le contrôle de la suspension avant est effectué. Le banc de mesure contrôle en premier lieu le poids de l'essieu puis le coefficient d'adhérence de la roue sur plateau vibrant (12). Les informations sont transmises vers la centrale de mesure et indiquent le coefficient d'adhérence de chacune des roues ainsi que le déséquilibre relevé.

Les mêmes mesures sont ensuite effectuées sur l'essieu arrière et complétées le cas échéant par une vérification de l'efficacité du frein à main ou frein de secours.

Après les opérations de contrôle sur les pneumatiques, freinage, suspensions et pollution, le véhicule est ensuite placé sur le pont élévateur (13) pour permettre la visite sous caisse. Il est souhaitable d'utiliser un pont élévateur qui permet d'effectuer simultanément la levée du véhicule sous roues et sous caisse avec toutes les sécurités requises.

Une fois cette opération réalisée, le contrôle des projecteurs est fait à l'aide d'une console escamotable de réglage des phares.

Puis la sortie du véhicule est effectuée en passant sur la plaque de ripage (14) qui permet de déceler des anomalies de la géométrie du train avant.

Les examens décrits précédemment, qui mettent en oeuvre une chaîne de contrôle centralisée, pourraient être complétés sans pour autant sortir du cadre de la présente invention.

L'essentiel est de disposer d'un conteneur susceptible d'être transporté facilement et qui peut être opérationnel dans de très brefs délais sans nécessiter de main d'oeuvre importante. Avec la réalisation décrite, le conteneur peut être opérationnel en moins de quinze minutes avec une seule personne.

D'autres mises en oeuvre de la présente invention, à la portée de l'Homme de l'Art, auraient également pu être envisagées sans pour autant sortir du cadre de celle-ci.

**Revendications**

1. Conteneur aménagé pour le contrôle technique des véhicules, destiné dans le cadre du contrôle technique et de la sécurité routière à être transporté par camion (2) sur les lieux d'examen où les véhicules sont expertisés à l'aide de son équipement embarqué, **caractérisé** par le fait qu'il présente des moyens de mise à niveau qui lui permettent de se poser au sol depuis le châssis du camion (2) et réciproquement.

2. Conteneur aménagé pour le contrôle technique des véhicules, selon la revendication 1, **caractérisé** par le fait que les moyens se présentent sous la forme de vérins (3) télescopiques qui forment des béquilles pour le conteneur (1).

3. Conteneur aménagé pour le contrôle technique des véhicules, selon la revendication 2, **caractérisé** par le fait que les vérins (3) télescopiques sont synchronisés.

4. Conteneur aménagé pour le contrôle technique des véhicules, selon la revendication 1, **caractérisé** par le fait que le toit (5) du conteneur (1) dispose de moyens de surélévation.

5. Conteneur aménagé pour le contrôle technique des véhicules, selon la revendication 4, **caractérisé** par le fait que les moyens de surélévation (7) se présentent sous la forme de vérins.

6. Conteneur (aménagé pour le contrôle technique des véhicules, selon la revendication 1, **caractérisé** par le fait que les panneaux latéraux (4) du conteneur (1) sont articulés sur le toit (5) dudit conteneur pour permettre leur relevage.

7. Conteneur aménagé pour le contrôle technique des véhicules, selon la revendication 6, **caractérisé** par le fait que le relevage des panneaux latéraux (4) est assisté par des compas à gaz.

8. Conteneur aménagé pour le contrôle technique des véhicules, selon la revendication 1, **caractérisé** par le fait que les rampes d'accès (8) et de sortie (9) sont manoeuvrées hydrauliquement.

9. Conteneur aménagé pour le contrôle technique des véhicules, selon la revendication 3, caractérisé par le fait que chaque vérin télescopique (3) peut être manoeuvré individuellement pour corriger les défauts de déclivité ou d'inégalités du sol et ce avec une télécommande à distance sans câble.

# FIG.1

POSITION ROUTE

# FIG.2

MISE EN EXPLOITATION

ACCÈS

# FIG.3

POSITION EXPLOITATION

SORTIE

ACCÈS

GENDARMERIE NATIONALE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-3140902 (A. EYERLE)<br>* page 12, ligne 1 - page 12, ligne 15; figures *<br>* page 13, ligne 1 - page 14, ligne 9 * | 1, 2, 4, 8 | B60P3/14<br>B60P1/64 |
| A | | 3, 5-7, 9 | |
| | --- | | |
| A | FR-A-2545427 (D. BIBARD)<br>* page 4, ligne 10 - page 6, ligne 16; figures * | 1, 2, 8, 9 | |
| | --- | | |
| A | US-A-3308845 (F. E. BELLAS)<br>* revendication 1; figures * | 1, 4, 6, 8 | |
| | --- | | |
| A | US-A-4313708 (M. J. TILIAKOS)<br>* le document en entier * | 1-3 | |
| | ----- | | |

**DOMAINES TECHNIQUES RECHERCHES (Int. Cl.5 )**

B60P

Le présent rapport a été établi pour toutes les revendications

| Lieu de la recherche | Date d'achèvement de la recherche | Examinateur |
|---|---|---|
| LA HAYE | 12 SEPTEMBRE 1990 | FRANKS B.G. |

EPO FORM 1503 03.82 (P0402)

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant